(19) Europäisches Patentamt
European Patent Office
Office européen des brevets

(11) **EP 4 456 179 A1**

(12) **EUROPEAN PATENT APPLICATION**
published in accordance with Art. 153(4) EPC

(43) Date of publication:
**30.10.2024 Bulletin 2024/44**

(21) Application number: **21969243.1**

(22) Date of filing: **27.12.2021**

(51) International Patent Classification (IPC):
$H01M\ 4/134^{(2010.01)}$    $H01M\ 4/133^{(2010.01)}$
$H01M\ 4/1393^{(2010.01)}$    $H01M\ 4/1395^{(2010.01)}$
$H01M\ 4/38^{(2006.01)}$    $H01M\ 4/583^{(2010.01)}$
$H01M\ 4/62^{(2006.01)}$    $H01M\ 10/0525^{(2010.01)}$

(52) Cooperative Patent Classification (CPC):
Y02E 60/10

(86) International application number:
**PCT/CN2021/141475**

(87) International publication number:
**WO 2023/122855 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• LIAO, Qunchao
  Ningde, Fujian 352100 (CN)
• HUA, Chuanshan
  Ningde, Fujian 352100 (CN)

(74) Representative: **Icosa
83 avenue Denfert-Rochereau
75014 Paris (FR)**

(54) **ELECTROCHEMICAL DEVICE AND ELECTRONIC DEVICE**

(57) This application provides an electrochemical device and an electronic device. The electrochemical device includes a positive electrode plate, a negative electrode plate, and an electrolyte solution. The negative electrode plate includes a negative current collector and a negative electrode material layer. The negative electrode material layer includes a silicon-based composite material. The silicon-based composite material includes a silicon-based particle. Strength of the negative current collector is A MPa. A difference between a maximum value and a minimum value of a relative mass percent of silicon atoms in the silicon-based particle is B%, and a mass percent of silicon in the negative electrode material layer is C%, satisfying:

$$A \geq 10B + 250(C^{1/4} + \frac{1}{10}/C).$$

By synergistically adjusting A, B, and C to meet the above conditions, this application achieves a lithium-ion battery of good cycle performance and expansion resistance.

EP 4 456 179 A1

Si

FIG. 1b

**Description**

**TECHNICAL FIELD**

This application relates to the technical field of electrochemistry, and in particular, to an electrochemical device and an electronic device.

**BACKGROUND**

Lithium-ion batteries are widely used in the field of consumer electronics by virtue of many advantages such as high volumetric and gravimetric energy densities, a long cycle life, a high nominal voltage, a low self-discharge rate, a small size, and a light weight. In recent years, with rapid development of electric vehicles and portable electronic devices, people are posing higher requirements on the energy density, safety, cycle performance, and the like of the battery, and are expecting the rollout of a new lithium-ion battery with overall performance enhanced comprehensively.

A silicon material is of a high specific capacity, and can significantly increase the energy density of the lithium-ion battery when serving as a negative electrode material of the lithium-ion battery. However, the silicon material expands and shrinks greatly in volume in a process of deintercalation and intercalation of lithium, thereby repeatedly disrupting and generating the solid electrolyte interphase (SEI) film during cycling, consuming reversible lithium, and impairing the cycle performance and expansion resistance of the lithium-ion battery.

**SUMMARY**

An objective of this application is to provide an electrochemical device and an electronic device to improve cycle performance and expansion resistance of the lithium-ion battery. Specific technical solutions are as follows:

A first aspect of this application provides an electrochemical device. The electrochemical device includes a positive electrode plate, a negative electrode plate, and an electrolyte solution. The negative electrode plate includes a negative current collector and a negative electrode material layer. The negative electrode material layer includes a silicon-based composite material. The silicon-based composite material includes a silicon-based particle. Strength of the negative current collector is A MPa. A difference between a maximum value and a minimum value of a relative mass percent of silicon atoms in the silicon-based particle is B%, and a mass percent of silicon in the negative electrode material layer is C%, satisfying:

$$A \geq 10B + 250(C^{1/4} + \frac{1}{10}/C).$$

By synergistically adjusting A, B, and C to meet the above conditions, this application achieves a lithium-ion battery of good cycle performance and expansion resistance.

In an embodiment of this application, B satisfies: $10 \leq B \leq 16$. By controlling the value of B to fall within the above range, this application obtains a silicon-based particle of good homogeneity of silicon distribution, thereby reducing the stress generated by the expansion of the lithium-ion battery, and achieving a lithium-ion battery of good cycle performance and expansion resistance.

In an embodiment of this application, C satisfies: $1 \leq C \leq 20$. By controlling the value of C to fall within the above range, this application can balance the expansion resistance and energy density of the lithium-ion battery.

In an embodiment of this application, A satisfies: $370 \leq A \leq 800$. By controlling the value of A to fall within the above range, this application can balance the expansion resistance and production cost of the lithium-ion battery.

In an embodiment of this application, a thickness of the negative electrode material layer on one side is H, and a maximum value of a particle diameter of the silicon-based particle is $D_{max}$, satisfying: $H \geq 3 \times D_{max}$. By controlling the values of H and $D_{max}$ to satisfy the above relation, this application can improve the cycle performance and expansion resistance of the lithium-ion battery.

In an embodiment of this application, the $D_{max}$ of the silicon-based particle satisfies: $10\ \mu m \leq D_{max} \leq 25\ \mu m$. By controlling the $D_{max}$ to fall within the above range, this application can favorably balance the processability, expansion resistance, and energy density of the lithium-ion battery.

In an embodiment of this application, a thickness H of the negative electrode material layer on one side satisfies: $30\ \mu m \leq H \leq 90\ \mu m$. By controlling the thickness H of the negative electrode material layer on one side to fall within the above range, this application can balance the strength and toughness of the negative electrode material layer, and improve the performance of the lithium-ion battery.

In an embodiment of this application, a porosity of the negative electrode plate is P%, and the P and C satisfy: P >

$15 \times C^{1/4}$. By controlling the P and C to satisfy the above relation, this application improves the expansion resistance and kinetic performance of the lithium-ion battery.

In an embodiment of this application, P satisfies: $18 \leq P \leq 40$. By controlling the value of P to fall within the above range, this application enables the negative electrode plate to be efficiently infiltrated in the electrolyte solution, endows the negative electrode plate with good strength, and improves the expansion resistance and kinetic performance of the lithium-ion battery.

In an embodiment of this application, the electrolyte solution includes fluoroethylene carbonate. Based on a mass of the electrolyte solution, a mass percent of the fluoroethylene carbonate is Q%, and the Q and C satisfy: $0.3 \leq C/Q \leq 3$. By controlling the values of Q and C to satisfy the above relation, this application achieves a lithium-ion battery of good expansion resistance and kinetic performance.

In an embodiment of this application, Q satisfies: $1 \leq Q \leq 20$. By controlling the value of Q to fall within the above range, this application can improve the cycle performance of the lithium-ion battery.

In an embodiment of this application, the silicon-based particle includes silicon and carbon. An atomic ratio between silicon and carbon in the silicon-based particle is 1: (1 to 2.5). The negative electrode plate of this application includes the silicon-based particle with the above atomic ratio between elements, and contributes to achieving a lithium-ion battery of good expansion resistance and cycle performance.

A second aspect of this application provides an electronic device. The electronic device includes the electrochemical device according to the first aspect.

This application provides an electrochemical device and an electronic device. The electrochemical device includes a positive electrode plate, a negative electrode plate, and an electrolyte solution. The negative electrode plate includes a negative current collector and a negative electrode material layer. The negative electrode material layer includes a silicon-based composite material. The silicon-based composite material includes a silicon-based particle. Strength of the negative current collector is A MPa. A difference between a maximum value and a minimum value of a relative mass percent of silicon atoms in the silicon-based particle is B%, and a mass percent of silicon in the negative electrode material layer is C%, satisfying:

$$A \geq 10B + 250(C^{1/4} + \frac{1}{10}/C).$$

By synergistically adjusting A, B, and C to meet the above conditions, this application achieves a lithium-ion battery of good cycle performance and expansion resistance. Definitely, a single technical solution of this application implemented does not necessarily achieve all of the above advantages concurrently.

**BRIEF DESCRIPTION OF DRAWINGS**

To describe the technical solutions in this application or the prior art more clearly, the following outlines the drawings to be used in the embodiments of this application or the prior art. Evidently, the drawings outlined below are merely a part of embodiments of this application.

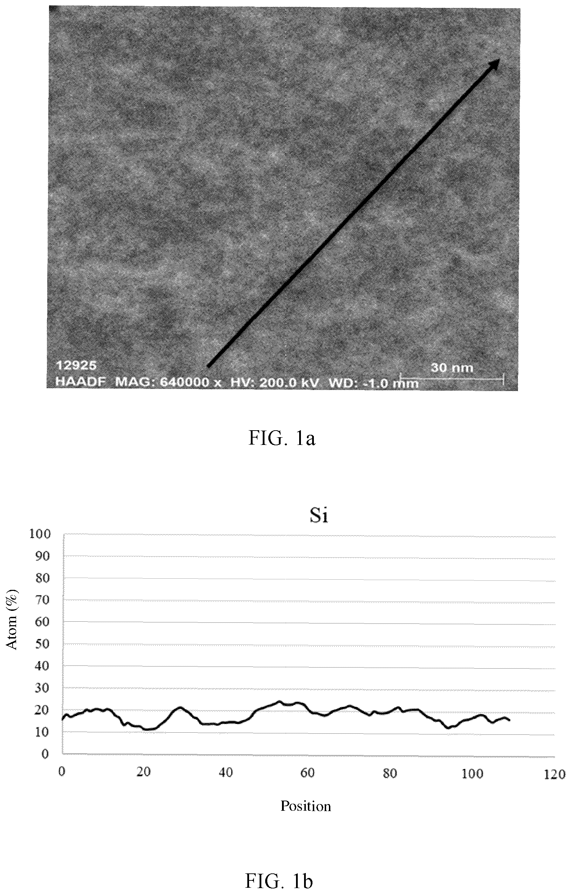

FIG. 1a is a scanning electron microscope (SEM) image of a cross-section of a silicon-based particle; and
FIG. 1b is a fluctuation curve of a relative mass percent of silicon atoms in an energy-dispersive X-ray spectrometer (EDS) line scan graph.

**DETAILED DESCRIPTION**

To make the objectives, technical solutions, and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

In the prior art, silicon nanocrystallization and silicon compounding are main approaches to alleviating the lithiation expansion of a silicon negative electrode. For example, by reducing the particle size of a silicon material to the nanoscale, the stress generated during lithiation can be alleviated, and the rupture of the material can be reduced; or, by compounding the silicon material with another carbonaceous material, the contact of the silicon material with an electrolyte solution can be reduced, and the repeated generation of the solid electrolyte interphase (SEI) film can be reduced. However, the silicon nanocrystallization method incurs the problems of a complicated preparation process and high energy consumption. In addition, the specific surface area of the silicon nanomaterial is overly large, thereby making the material extremely prone to agglomerate and restricting the exertion of electrical performance of the lithium-ion battery. The existing compounding method makes improvement on the carbonaceous composite material alone but ignores the impact of other factors on the expansion of the lithium-ion battery as a whole, thereby playing a limited role in improving the expansion resistance and cycle performance of the lithium-ion battery. In addition, the volume expansion generated by lithiation is an intrinsic property of silicon-based materials. Relying solely on such approaches can alleviate the expansion of the silicon negative electrode to some extent, but the alleviation is not enough to meet the requirements of industrialized product applications.

In view of the above situation, this application provides an electrochemical device and an electronic device to improve cycle performance and expansion resistance of a lithium-ion battery.

A first aspect of this application provides an electrochemical device. The electrochemical device includes a positive electrode plate, a negative electrode plate, and an electrolyte solution. The negative electrode plate includes a negative current collector and a negative electrode material layer. The negative electrode material layer includes a silicon-based composite material. The silicon-based composite material includes a silicon-based particle. Strength of the negative current collector is A MPa. A difference between a maximum value and a minimum value of a relative mass percent of silicon atoms in the silicon-based particle is B%, and a mass percent of silicon in the negative electrode material layer is C%, satisfying:

$$A \geq 10B + 250(C^{1/4} + \frac{1}{10}/C).$$

Through research, the applicant hereof finds that a difference B% between a maximum value and a minimum value of the relative mass percent of silicon atoms in a silicon-based particle is a fluctuation value. The fluctuation value can denote homogeneity of silicon distribution in the silicon-based particle. The larger the fluctuation value, the lower the homogeneity of silicon distribution. A lithiation process of silicon generates volume expansion. The expansion occurs in different directions (for example, along the length direction, width direction, and height direction of the lithium-ion battery). Therefore, the negative current collector needs to be of some strength to resist the stress brought about by the expansion and suppress the deformation of the lithium-ion battery. The applicant hereof also finds that the more homogeneous the silicon distribution in the silicon-based particle, the smaller the stress generated by the expansion; and, the higher the silicon content in the negative electrode material layer, the greater the expansion tendency during cycling of the lithium-ion battery. With the intensification of the fluctuation of the silicon distribution in the silicon-based particle and the increase of the mass percent of silicon in the negative electrode material layer, the requirement on the strength of the negative current collector is higher. However, when the strength of the negative current collector exceeds a specified value, the improvement on the cycle performance and expansion resistance declines significantly. Based on the above findings, by synergistically adjusting A, B, and C to meet the above conditions, this application achieves a lithium-ion battery of good cycle performance and expansion resistance.

In an embodiment of this application, B satisfies: $10 \leq B \leq 16$. By controlling the value of B to fall within the above range, this application obtains a silicon-based particle of good homogeneity of silicon distribution, thereby reducing the stress generated by the expansion of the lithium-ion battery, and achieving a lithium-ion battery of good cycle performance and expansion resistance.

In an embodiment of this application, C satisfies: $1 \leq C \leq 20$. By controlling the value of C to fall within the above range, this application can avoid the following problems: The silicon content in the negative electrode material layer is overly low, thereby reducing the energy density of the lithium-ion battery; or, the silicon content in the negative electrode material layer is overly high, thereby intensifying the expansion tendency of the lithium-ion battery. Therefore, by controlling the value of C to fall within the above range, this application can favorably balance the energy density and expansion resistance of the lithium-ion battery.

In an embodiment of this application, A satisfies: $370 \leq A \leq 800$. By controlling the value of A to fall within the above range, this application can avoid the following: if the strength of the negative current collector is overly low, the expansion resistance of the lithium-ion battery is impaired; or, if the strength of the negative current collector is overly high, the production cost of the current collector is increased greatly without improving the cycle performance and expansion resistance. Therefore, by controlling the value of A to fall within the above range, this application can balance the expansion resistance and production cost of the lithium-ion battery.

In an embodiment of this application, a thickness of the negative electrode material layer on one side is H, and a maximum value of a particle diameter of the silicon-based particle is $D_{max}$, satisfying: $H \geq 3 \times D_{max}$. By controlling the values of H and $D_{max}$ to satisfy the above relation, this application can improve the cycle performance and expansion resistance of the lithium-ion battery. A possible reason is that the lithiation of the silicon material generates large expansion. When the thickness of the negative electrode plate is constant, the large value of $D_{max}$ of the silicon-based particle is prone to cause uneven expansion of the electrode plate, and cause excessive expansion of the negative electrode plate in local regions. In addition, the slurry of the negative electrode material is not dispersed ideally in a completely uniform manner. Some of the silicon-based particles may be unevenly dispersed in the negative electrode plate. If the value of $D_{max}$ of the silicon-based particles is overly large, bumps are prone to occur on the negative electrode plate, thereby impairing the appearance and performance of the negative electrode plate, and impairing the cycle performance and the expansion resistance of the lithium-ion battery. Therefore, by controlling the values of H and $D_{max}$ to satisfy the above relation, this application can achieve a lithium-ion battery of good cycle performance and expansion resistance.

Understandably, the negative electrode material layer may be disposed on just one side of the negative current collector, that is, the current collector is coated on one side; or the negative electrode material layer may be disposed on both sides of the negative current collector, that is, the current collector is coated on both sides. In an example, assuming that the overall thickness of the negative electrode plate is h and the thickness of the negative current collector is $h_1$, when the current collector is coated on both sides, H is: H = (h - $h_1$)/2; when the current collector is coated on one side, H is: H=h-$h_1$.

In an embodiment of this application, the $D_{max}$ of the silicon-based particle satisfies: 10 $\mu$m $\leq D_{max} \leq$ 25 $\mu$m. By controlling the $D_{max}$ to fall within the above range, this application can avoid the following problems: (i) The value of $D_{max}$ of the silicon-based particle is overly large, and the large value is prone to cause uneven expansion of the electrode plate, and, during processing, the large value is prone to cause bumps that adversely affect the interface and expansion resistance of the lithium-ion battery; or (ii) the value of the $D_{max}$ of the silicon-based particle is overly small, and the small value results in an overly large specific surface area, gives rise to more SEI films that are accumulated on the surface of the negative electrode, and intensifies the expansion tendency, and during processing, the bonding effect is not satisfactory unless a larger amount of binder is applied, thereby reducing the energy density of the lithium-ion battery. Therefore, by controlling the $D_{max}$ to fall within the above range, this application can favorably balance the processability, expansion resistance, and energy density of the lithium-ion battery.

In an embodiment of this application, a thickness H of the negative electrode material layer on one side satisfies: 30 $\mu$m $\leq$ H $\leq$ 90 $\mu$m. By controlling the thickness H of the negative electrode material layer on one side to fall within the above range, this application can balance the strength and toughness of the negative electrode material layer, and improve the performance of the lithium-ion battery.

In an embodiment of this application, a porosity of the negative electrode plate is P%, and the P and C satisfy: P > 15 $\times$ C$^{1/4}$. By controlling the P and C to satisfy the above relation, this application improves the expansion resistance and kinetic performance of the lithium-ion battery. A possible reason is that the volume expansion of the silicon-based material is very large (approximately 300%) after lithiation. The huge volume effect is prone to cause problems such as negative electrode plate debonding and powder shedding. The negative electrode plate of a specified porosity can effectively alleviate the volume expansion of the silicon-based material. However, when the porosity of the negative electrode plate is overly low, the electrolyte solution can hardly infiltrate the negative electrode plate sufficiently, thereby increasing the transmission distance of lithium ions, and impairing the kinetic performance of the lithium-ion battery. Therefore, by controlling the values of P and C to satisfy the above relation, this application achieves a lithium-ion battery of good expansion resistance and kinetic performance.

In an embodiment of this application, P satisfies: 18 $\leq$ P $\leq$ 40. By controlling the value of P to fall within the above range, this application enables the negative electrode plate to be efficiently infiltrated in the electrolyte solution, endows the negative electrode plate with good strength, and improves the expansion resistance and kinetic performance of the lithium-ion battery.

In an embodiment of this application, the electrolyte solution includes fluoroethylene carbonate (FEC). Based on a mass of the electrolyte solution, a mass percent of the fluoroethylene carbonate is Q%, and the Q and C satisfy: 0.3 $\leq$ C/Q $\leq$ 3. By controlling the Q and C to satisfy the above relation, this application can avoid the following problems: The C/Q ratio is overly high, and the expansion tendency increases during cycling of the lithium-ion battery; or, the C/Q ratio is overly low, and the added FEC reduces the mobility of lithium ions in the electrolyte solution, thereby impairing the C-rate performance of the lithium-ion battery. Therefore, by controlling the values of Q and C to satisfy the above relation, this application achieves a lithium-ion battery of good expansion resistance and kinetic performance.

In an embodiment of this application, Q satisfies: 1 $\leq$ Q $\leq$ 20. The fluoroethylene carbonate (FEC) is an important film-forming additive in the electrolyte solution. The SEI film generated by decomposition of the FEC during cycling of the lithium-ion battery isolates and precludes the active material from contacting the electrolyte solution, thereby reducing depletion of lithium ions. By controlling the value of Q to fall within the above range, this application can improve the cycle performance of the lithium-ion battery.

In an embodiment of this application, the silicon-based particle includes silicon and carbon. An atomic ratio between silicon and carbon in the silicon-based particle is 1: (1 to 2.5). The negative electrode plate of this application includes the silicon-based particle with the above atomic ratio between elements, and contributes to achieving a lithium-ion battery of good expansion resistance and cycle performance.

The method for preparing the silicon-based composite material is not limited herein, as long as the objectives of this application can be achieved. An exemplary preparation method includes: carbonizing an organic compound to obtain a porous carbon matrix, and then placing the porous carbon matrix in a silicon-containing gas atmosphere, and then heat-treating the carbon matrix to obtain a silicon-based composite material. In an example, the silicon-based composite material may be prepared by the following method:

Placing a porous carbon matrix into a rotary furnace, blowing the furnace tube with a nitrogen gas at a room temperature for 20 to 40 minutes, and then increasing the temperature of the porous carbon matrix specimen to 450 °C to 500 °C; adjusting the nitrogen flow rate so that the nitrogen gas is retained in the rotary furnace for at least 90 seconds, and keeping this flow rate for approximately 30 minutes; switching the gas supply from nitrogen to a mixture of a silicon-containing gas and nitrogen (the volume fraction of the silicon-containing gas in the mixture is 5% to 30%); depositing a precipitate for 8 hours to 16 hours at a gas flow rate of 200 sccm to 400 sccm, passing a nitrogen gas into the rotary furnace continuously, blowing out the silicon-containing gas from the furnace, and then blowing the rotary furnace with the nitrogen gas for 30 minutes, and then cooling the rotary furnace down to a room temperature over a period of 5 hours to 10 hours; converting the gas flow from the nitrogen gas to air that comes from a compressed air source, so that the nitrogen gas in the rotary furnace is gradually converted into air over a period of 1 hour to 2 hours and a silicon-based composite material is obtained.

The type of the porous carbon matrix is not particularly limited herein, as long as the objectives of this application can be achieved. For example, the porous carbon matrix may be at least one selected from hard carbon, soft carbon, or graphite. As an example, the hard carbon may include resin carbon, carbon black, organic polymeric pyrolytic carbon, or a combination thereof. The soft carbon may include carbon fibers, carbon microspheres, or a combination thereof. The particle diameter of the porous carbon matrix is not particularly limited, as long as the objectives of this application can be achieved. For example, the particle diameter of the porous carbon matrix falls within the following ranges: $3 \ \mu m < D_{v50} < 15 \ \mu m$, and $15 \ \mu m < D_{v99} < 30 \ \mu m$.

The difference B% between the maximum value and the minimum value of the relative mass percent of silicon atoms in the silicon-based particle is related to the homogeneity of pore distribution inside the carbon matrix and the pore size. For example, the more homogeneous the pore distribution in the carbon matrix, the smaller the value of B%. Based on this, the value of B% may be adjusted by adjusting the pore distribution and the pore size.

The mass percent C% of silicon in the negative electrode material layer is related to the amount of the silicon-based composite material added. The content of silicon deposited inside the silicon-based composite material may be adjusted by adjusting the deposition temperature, the deposition time, and the concentration of the silicon-containing gas. For example, C% typically increases with the rise of the deposition temperature, C% typically increases with the increase of the deposition time, and C% typically increases with the rise of the concentration of the silicon-containing gas. Based on this, the mass percent C% of silicon in the negative electrode material layer can be adjusted.

The particle diameter maximum value $D_{max}$ of the silicon-based particles is positively correlated to the particle diameter of the porous carbon matrix. Based on this, the particle diameter maximum value $D_{max}$ of the silicon-based particles may be adjusted by sieving the porous carbon matrix.

The porosity of the negative electrode plate typically decreases with the increase of the compaction density of the negative electrode plate. Based on this, the compaction density of the negative electrode plate may be adjusted by adjusting the cold-press pressure on the negative electrode plate, thereby adjusting the porosity of the negative electrode plate.

The atomic ratio between silicon and carbon in the silicon-based particles may be adjusted by adjusting the ratio between the silicon-containing gas and the nitrogen gas in the gas mixture. Generally, with the increase of the percentage of the silicon-containing gas in the gas mixture, more silicon is deposited in the porous carbon matrix, thereby increasing the atomic ratio between silicon and carbon in the silicon-based particles.

In this application, the negative electrode plate includes a negative current collector. The negative electrode material layer may be disposed on one surface or both surfaces of the negative current collector along the thickness direction. It is hereby noted that the "surface" here may be the entire region of the negative current collector, or a partial region of the negative current collector, without being particularly limited in this application, as long as the objectives of the application can be achieved. The negative current collector is not particularly limited in this application, as long as the objectives of this application can be achieved. For example, the negative current collector may include, but is not limited to, a copper foil, a copper alloy foil, a nickel foil, a stainless steel foil, a titanium foil, foamed nickel, foamed copper, or a composite current collector, or the like. The thickness of the negative current collector is not particularly limited in this application, as long as the objectives of this application can be achieved. For example, the thickness is $4 \ \mu m$ to $12 \ \mu m$. In this application, the thickness of the negative electrode material layer may be $70 \ \mu m$ to $120 \ \mu m$.

In this application, the negative electrode material layer not only includes the silicon-based composite material, but also includes other negative active materials known in this field. For example, the negative electrode material layer may include, but is not limited to, at least one of natural graphite, artificial graphite, mesocarbon microbeads, hard carbon, soft carbon, silicon, a silicon-carbon composite, a Li-Sn alloy, a Li-Sn-O alloy, Sn, SnO, $SnO_2$, spinel-structured lithiated $TiO_2$-$Li_4$, $Ti_5O_{12}$, or a Li-Al alloy.

In this application, the negative electrode material layer may further include a negative conductive agent. The negative conductive agent is not particularly limited herein, as long as the objectives of this application can be achieved. For example, the conductive agent may be, but is not limited to, at least one of a carbon-based material, a metal-based material, or a conductive polymer. The carbon-based material is at least one selected from natural graphite, artificial graphite, conductive carbon black, acetylene black, Ketjen black, or carbon fibers. The metal-based material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

In this application, the negative electrode material layer may further include a negative binder. The negative binder is not particularly limited in this application, as long as the objectives of this application can be achieved. For example, the negative binder may include, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylic styrene-butadiene rubber, epoxy resin, or nylon.

Optionally, the negative electrode plate may further include a conductive layer. The conductive layer is located between the negative current collector and the negative electrode material layer. The constituents of the conductive layer are not particularly limited in this application, and may be a conductive layer commonly used in the art. The conductive layer may include, but is not limited to, the foregoing negative conductive agent and the foregoing negative binder.

The electrolyte solution of this application may further include a lithium salt and other nonaqueous solvents. The lithium salt is not particularly limited herein, as long as the objectives of this application can be achieved. For example, the lithium salt may include, but is not limited to, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. Preferably, the lithium salt includes $LiPF_6$.

The other nonaqueous solvents are not particularly limited herein, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of butylene carbonate (BC) or vinyl ethylene carbonate (VEC). The fluorocarbonate compound may include, but is not limited to, at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The mass percent of the other nonaqueous solvents is not particularly limited herein, as long as the objectives of this application can be achieved. For example, the mass percent of the other nonaqueous solvent is 67% to 87%, for example, may be 67%, 67.5%, 70%, 75%, 80%, 83%, 85%, 86.5%, 87%, or a value falling within a range formed by any two thereof.

The electrochemical device according to this application may further include a positive electrode plate. The positive electrode plate is not particularly limited in this application, as long as the objectives of this application can be achieved. For example, the positive electrode plate generally includes a positive current collector and a positive material layer. The positive electrode material layer may be disposed on one surface of the positive current collector in a thickness direction or on both surfaces of the positive current collector in the thickness direction. It is hereby noted that the "surface" here may be the entire region of the positive current collector, or a partial region of the positive current collector, without being particularly limited herein, as long as the objectives of the application can be achieved. The positive current collector is not particularly limited in this application, as long as the objectives of this application can be achieved. For example, the positive current collector may include, but is not limited to, an aluminum foil, an aluminum alloy foil, a composite current collector, or the like. The thickness of the positive current collector is not particularly limited in this application, as long as the objectives of this application can be achieved. For example, the thickness is 8 $\mu$m to 12 $\mu$m.

In this application, the positive electrode material layer includes a positive active material. The positive active material is not particularly limited herein, as long as the objectives of this application can be achieved. For example, the positive electrode material may include at least one of a composite oxide of lithium or a composite oxide of a transition metal element. The transition metal element is not particularly limited herein, as long as the objectives of this application can be achieved. For example, the transition metal element may include at least one of nickel, manganese, cobalt, or iron. Specifically, the positive active material may include at least one of lithium nickel cobalt manganese oxide, lithium nickel cobalt aluminum oxide, lithium iron phosphate, a lithium-rich manganese-based material, lithium cobalt oxide, lithium manganese oxide, lithium manganese iron phosphate, or lithium titanium oxide.

In this application, the positive electrode material layer may further include a positive conductive agent. The positive conductive agent is not particularly limited herein, as long as the objectives of this application can be achieved. For example, the conductive agent may include, but is not limited to, at least one of conductive carbon black (Super P), carbon nanotubes (CNTs), carbon fibers, acetylene black, flake graphite, Ketjen black, graphene, a metal material, or a conductive polymer. Preferably, the positive conductive agent may include conductive carbon black and carbon nanotubes. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. In this application, the positive electrode material layer may further include a positive electrode binder. The positive electrode binder is not particularly limited herein, as long as the objectives of this application can be achieved. For example, the binder may include, but is not limited to, at least one of fluorine-containing resin, polypropylene resin, fiber-type binder, rubber-type binder, or polyimide-type binder.

Optionally, the positive electrode plate may further include a conductive layer. The conductive layer is located between the positive current collector and the positive electrode material layer. The constituents of the conductive layer are not particularly limited herein, and may be a conductive layer commonly used in the art. For example, the conductive layer may include, but is not limited to, the positive conductive agent and the positive electrode binder.

The electrochemical device in this application may further include a separator. The separator is not particularly limited herein, as long as the objectives of this application can be achieved. The separator may include a substrate layer and a surface treatment layer. The substrate layer is not particularly limited herein. For example, the separator may include, but is not limited to, at least one of polyethylene-based, polypropylene-based, or polytetrafluoroethylene-based polyolefin separator, a polyester film (such as polyethylene terephthalate film), a cellulose film, a polyimide film, a polyamide film, a spandex or aramid film, a woven film, a non-woven film (non-woven fabric), a microporous film, a composite film, separator paper, a laminated film, or a spinning film, and preferably polyethylene or polypropylene. The polyethylene or polypropylene is highly effective in preventing a short circuit, and can improve the stability of the electrochemical device by virtue of a turn-off effect. The separator according to this application may be a porous structure. The pore size of the separator is not particularly limited, as long as the objectives of this application can be achieved. For example, the pore size may be 0.01 $\mu$m to 1 $\mu$m. The thickness of the separator is not particularly limited in this application, as long as the objectives of this application can be achieved. For example, the thickness may be 5 $\mu$m to 500 $\mu$m.

In this application, a surface treatment layer is disposed on at least one surface of the substrate layer. The surface treatment layer is not particularly limited in this application, and may be a polymer layer or an inorganic compound layer, or a layer compounded of a polymer and an inorganic compound. The inorganic compound layer may include, but is not limited to, inorganic particles and an inorganic compound layer binder. The inorganic particles are not particularly limited in this application, and may include, but is not limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic compound layer binder is not particularly limited in this application, and may include, but is not limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer. The polymer is not particularly limited herein. The material of the polymer may include, but is not limited to, at least one of polyamide, polyacrylonitrile, acrylate polymer, polyacrylic acid, polyacrylate, polyvinylpyrrolidone, polyvinyl ether, polyvinylidene difluoride, or poly(vinylidene difluoride-co-hexafluoropropylene).

The electrochemical device in this application is not particularly limited, and may be any device in which an electrochemical reaction occurs. In some embodiments, the electrochemical device may include, but is not limited to, a lithium-ion battery.

The process of preparing the electrochemical device is well known to a person skilled in the art, and is not particularly limited in this application. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain an electrochemical device. In addition, an overcurrent prevention element, a guide plate, and the like may be placed into a pocket as required, so as to prevent the rise of internal pressure, overcharge, and overdischarge of the electrochemical device.

A second aspect of this application provides an electronic device. The electronic device includes the electrochemical device according to any one of the foregoing implementation solutions. The electrochemical device according to this application exhibits good expansion resistance and cycle performance, so that the electronic device according to this application exhibits a relatively long lifespan.

The electronic device is not particularly limited herein, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

## Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

## Test methods and devices

### Testing the porosity of the negative electrode plate

Testing the porosity of the negative electrode plate by a gas displacement method: Die-cutting 50 negative electrode plates by use of the same die to obtain disc specimens that each possess a radius of d; measuring the thickness h of each specimen, putting the 50 negative electrode plate specimens into a specimen cup of an AccuPyc II 1340 tester; filling the specimens with helium (He) in the airtight specimen chamber to obtain a true volume V of each specimen; and then calculating the porosity of the negative electrode plate specimen as: $P = (1 - V/\pi d^2 \times 50 \times h) \times 100\%$.

### Testing the strength of a current collector

Die-cutting a current collector with a die-cutter to cut out a specimen of 15 mm (width) $\times$ 70 mm (length). Fixing the specimen between an upper jig and a lower jig of a Go Tech tensile machine to measure the tensile strength of the specimen. Stretching the specimen at a speed of 5 mm/min, with a standard distance between the two jigs of the tensile machine being 50 mm. Recording the tensile strength and a displacement curve. The abrupt change point in the displacement curve is the break strength that withstands the external force.

### Testing the silicon content in the negative electrode material layer

Putting a negative electrode plate into a 100 °C vacuum oven for drying for 24 hours, scraping off a part of active material from the negative electrode plate by use of a scraper, and weighing the mass of the scraped active material as $M_1$, and then putting the scraped active material into a sustained air atmosphere for heat treatment at 800 °C to remove the carbonaceous material. Weighing the mass of the remaining material as $M_2$, and then calculating the silicon content in the negative electrode material layer as: $C = 0.467 \times M_2/M_1 \times 100\%$.

### Determining the difference between the maximum value and the minimum value of the relative mass percent of silicon atoms in the silicon-based particle

Drying a negative electrode plate in a vacuum oven at 100 °C for 24 hours, and processing the silicon-based particles in the electrode plate into a thin slice of 50 nm to 100 nm in thickness by use of a focused ion beam (FIB) in a protective atmosphere (such as nitrogen gas), with an SEM image shown in FIG. 1a, and then determining the relative mass percent of silicon atoms in the silicon-based particle by using an energy-dispersive X-ray spectrometer (EDS) line scan function in a transmission electron microscope (TEM). The test results are shown in FIG. 1b. The line scan position is any position inside the silicon-based particle. For example, the start point and the end point of the line scan data in FIG. 1b correspond to the start point and the end point of the black arrow in FIG. 1a respectively, and therefore, the line scan data in FIG. 1b is the data corresponding to the positions traversed by the black arrow in FIG. 1a. The fluctuation value of the silicon element is a difference between the maximum value and the minimum value of the relative mass percent of silicon atoms in the entire line scan graph.

**Determining the maximum value $D_{max}$ of the particle diameter of the silicon-based particle**

Cutting a negative electrode plate vertically by use of an ion beam cross-section polisher, selecting at least 20 silicon-based particles randomly in the electrode plate under an electron microscope, and testing the particle size of the silicon-based particles. The maximum value of the particle size among the randomly selected particles is denoted as $D_{max}$.

**Determining the content of fluoroethylene carbonate (FEC) in the electrolyte solution**

Discharging a lithium-ion battery until a State of Charge (SOC) of 0%, and then centrifuging the battery to obtain a liquid. Performing a gas chromatography mass spectrometry (GC-MS) test on the liquid, and determining the mass percent of the FEC in the electrolyte solution.

**Testing the cycle performance of a lithium-ion battery cycled at a room temperature**

Charging a lithium-ion battery at a constant current of 0.7 C-rate (C) at 25 °C until the voltage reaches 4.45 V, and then charging the battery at a constant voltage until the current drops to 0.025C, leaving the battery to stand for 5 minutes, and then discharging the battery at a current of 0.5C until the voltage reaches 3.0 V. Using the capacity obtained in this step as an initial discharge capacity, performing a 0.7C charge/0.5C discharge cycle test for 400 cycles, and recording the discharge capacity at the end of the 400th cycle. Cycle capacity retention rate = (400th-cycle discharge capacity/first-cycle discharge capacity) $\times$ 100%.

**Testing the cycle performance of a lithium-ion battery cycled at a low temperature**

Charging a chemically formed lithium-ion battery at a constant current rate of 0.2C at 25 °C until the voltage reaches 4.45 V, and then charging the battery at a constant voltage until the current is less than or equal to 0.05C; subsequently, leaving the battery to stand for 30 minutes, and then discharging the battery at a constant current rate of 0.2C until the voltage reaches 3.0 V, and determining a 0.2C discharge capacity of the lithium-ion battery discharged at 25 °C.

Charging the lithium-ion battery at a constant current rate of 0.2C at 25 °C until the voltage reaches 4.45 V, and then charging the battery at a constant voltage until the current is less than or equal to 0.05C; subsequently, leaving the battery cell to stand in a -10 °C environment for 60 minutes, and then discharging the battery at a constant current rate of 0.2C until the voltage reaches 3.0 V, and determining the 0.2C discharge capacity of the lithium-ion battery discharged at -10 °C.

-10 °C discharge capacity retention rate of the lithium-ion battery (%) = - 10 °C discharge capacity/25 °C discharge capacity $\times$ 100%.

**Measuring the expansion rate of a lithium-ion battery**

Measuring the thickness of a lithium-ion battery in a 50% SOC at 25 °C by use of a spiral micrometer, denoted as $H_0$, and then measuring the thickness of the lithium-ion battery in a 100% SOC after the battery is cycled for 400 cycles according to the steps in the cycle performance test, denoted as $H_1$. 25 °C cycle expansion rate = $(H_1 - H_0)/H_0 \times$ 100%.

**Embodiment 1-1**

**<Preparing a silicon-based composite material>**

Placing a porous carbon matrix with a $D_{max}$ of 25 $\mu$m into a rotary furnace, blowing the furnace tube with a nitrogen gas at a room temperature for 30 minutes, and then increasing the heating temperature of the porous carbon specimen to 450 °C; adjusting the nitrogen flow rate so that the nitrogen gas is retained in the rotary furnace for at least 90 seconds, and keeping this flow rate for 30 minutes; switching the gas supply from nitrogen to a mixture of a silicon-containing gas (such as silane) and nitrogen gas, where the volume ratio between the silicon-containing gas and the nitrogen gas in the mixture is 5: 95; depositing a precipitate for 8 hours at a gas flow rate of 200 sccm, passing a nitrogen gas into the rotary furnace continuously, blowing out the silicon-containing gas from the furnace, and then blowing the rotary furnace with the nitrogen gas for 30 minutes, and then cooling the rotary furnace down to a room temperature over a period of several hours (such as 8 hours); converting the gas flow from the nitrogen gas to air that comes from a compressed air source, so that the nitrogen gas in the rotary furnace is gradually converted into air over a period of 2 hours and a silicon-based composite material, that is, silicon-based particle, is obtained. As tested, the difference B% between the maximum value and the minimum value of the relative mass percent of silicon atoms in the silicon-based particle is shown in Table 1.

**<Preparing a negative electrode plate>**

Mixing the above-prepared silicon-based composite material, graphite particles, and nano conductive carbon black at a mass ratio of 3: 94: 3 to obtain a first mixture. Mixing the first mixture with a binder polyacrylic acid (PAA) at a mass ratio of 95: 5, adding the mixture into deionized water, and stirring well to obtain a first mixed slurry in which the solid content is 70 wt%.

Coating one surface of an 8 $\mu$m-thick negative current collector copper foil with the first mixed slurry evenly, and oven-drying the slurry at 85 °C in a vacuum-dry environment for 12 hours to obtain a negative electrode plate coated with a negative active material on one side. Subsequently, repeating the above steps on the other surface of the negative electrode plate to obtain a negative electrode plate coated with the negative active material on both sides. Performing cold-pressing, slitting, and cutting on the resultant negative electrode plate to obtain a negative electrode plate of 76 mm $\times$ 867 mm in size. The thickness of the negative electrode plate is 90 mm, and the porosity of the negative electrode plate is 33%.

**<Preparing a positive electrode plate>**

Mixing lithium cobalt oxide as a positive active material, conductive carbon black, and polyvinylidene difluoride (PVDF) at a mass ratio of 95: 2.5: 2.5, adding NMP as a solvent, and stirring well to form a slurry in which the solid content is 75 wt%. Coating one surface of a 10 $\mu$m-thick positive current collector aluminum foil with the slurry evenly, and drying the slurry at a temperature of 90 °C to obtain a positive electrode plate coated with a 110 $\mu$m-thick coating layer. The coating on one side of the positive electrode plate is completed upon completion of the above steps. Subsequently, repeating the above steps on the other surface of the positive electrode plate to obtain a positive electrode plate coated with a positive active material on both sides. Subsequently, performing cold-pressing and cutting to obtain a positive electrode plate of 74 mm $\times$ 851 mm in size.

**<Preparing an electrolyte solution>**

Mixing ethylene carbonate (EC), propylene carbonate (PC), and diethyl carbonate (DEC) evenly at a mass ratio of 1: 1: 1 in an argon atmosphere glovebox in which the water content is less than 10 ppm, so as to obtain a base solvent. Adding $LiPF_6$, and stirring well to obtain an electrolyte solution in which the mass percent of $LiPF_6$ is 12.5 wt%.

**<Preparing a separator>**

Using a 15 $\mu$m-thick polyethylene (PE) film (manufactured by Celgard) as a separator.

**<Preparing a lithium-ion battery>**

Stacking the prepared positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an aluminum laminated film pocket, drying the pocket, and then injecting the electrolyte solution. Performing steps such as vacuum sealing, static standing, chemical formation, degassing, and edge trimming to obtain a lithium-ion battery.

**Embodiments 1-2 to 1-14**

Identical to Embodiment 1-1 except that the strength A of the negative current collector, the difference B% between the maximum value and the minimum value of the relative mass percent of silicon atoms in the silicon-based particle, and the mass percent C% of silicon in the negative electrode material layer are adjusted according to Table 1.

**Embodiments 2-1 to 2-9**

Identical to Embodiment 1-6 except that the thickness H of the negative electrode material layer on a single side and the maximum value $D_{max}$ of the particle diameter of the silicon-based particle are adjusted according to Table 2.

**Embodiments 3-1 to 3-9**

Identical to Embodiment 2-3 except that the porosity P% of the negative electrode plate and the mass percent C% of silicon in the negative electrode material layer are adjusted according to Table 3.

**Embodiment 4-1**

Identical to Embodiment 1-1 except that the process of <Preparing an electrolyte solution> is different from that in Embodiment 1-1.

**<Preparing an electrolyte solution>**

Mixing ethylene carbonate (EC), propylene carbonate (PC), and diethyl carbonate (DEC) evenly at a mass ratio of 1: 1: 1 in an argon atmosphere glovebox in which the water content is less than 10 ppm, so as to obtain a base solvent. Adding $LiPF_6$ and fluoroethylene carbonate, and stirring well to obtain an electrolyte solution in which the mass percent of $LiPF_6$ is 12.5 wt% and the mass percent of the fluoroethylene carbonate is shown in Table 4.

**Embodiments 4-2 to 4-4**

Identical to Embodiment 4-1 except that the mass percent Q% of the fluoroethylene carbonate is adjusted according to Table 4.

**Comparative Embodiments 1-1 to 1-4**

Identical to Embodiment 1-1 except that the strength A of the negative current collector, the difference B% between the maximum value and the minimum value of the relative mass percent of silicon atoms in the silicon-based particle, and the mass percent C% of silicon in the negative electrode material layer are adjusted according to Table 1.

**Table 1**

| | A | B | C | $10B+250(C^{1/4}+\frac{1}{10}/C)$ | 400th-cycle capacity retention rate cycled at 25 °C (%) | 400th-cycle deformation rate cycled at 25 °C (%) |
|---|---|---|---|---|---|---|
| Embodiment 1-1 | 375 | 10 | 1 | 375 | 92.9 | 8.4 |
| Embodiment 1-2 | 450 | 10 | 1 | 375 | 93.6 | 7.2 |
| Embodiment 1-3 | 550 | 10 | 1 | 375 | 93.7 | 7.2 |
| Embodiment 1-4 | 547.1 | 10 | 10 | 547.1 | 85.1 | 9.1 |
| Embodiment 1-5 | 600 | 10 | 10 | 547.1 | 87.7 | 8.1 |
| Embodiment 1-6 | 650 | 10 | 10 | 547.1 | 87.7 | 8.1 |
| Embodiment 1-7 | 629.9 | 10 | 20 | 629.9 | 83.2 | 11.6 |
| Embodiment 1-8 | 650 | 10 | 20 | 629.9 | 85.3 | 10.3 |

(continued)

| | A | B | C | $10B+250(C^{1/4}+\frac{1}{10}/C)$ | 400th-cycle capacity retention rate cycled at 25 °C (%) | 400th-cycle deformation rate cycled at 25 °C (%) |
|---|---|---|---|---|---|---|
| Embodiment 1-9 | 700 | 10 | 20 | 629.9 | 85.5 | 10.3 |
| Embodiment 1-10 | 700 | 14 | 20 | 669.9 | 84.5 | 9.6 |
| Embodiment 1-11 | 607 | 16 | 10 | 607 | 84.1 | 10.2 |
| Embodiment 1-12 | 650 | 16 | 10 | 607 | 86.3 | 9.4 |
| Embodiment 1-13 | 700 | 16 | 10 | 607 | 86.2 | 9.2 |
| Embodiment 1-14 | 800 | 16 | 10 | 607 | 86.1 | 9.2 |
| Comparative Embodiment 1-1 | 350 | 10 | 1 | 375 | 76.3 | 14.2 |
| Comparative Embodiment 1-2 | 500 | 10 | 10 | 547.1 | 74.4 | 14.7 |
| Comparative Embodiment 1-3 | 550 | 10 | 20 | 629.9 | 64.1 | 16.2 |
| Comparative Embodiment 1-4 | 550 | 16 | 10 | 607 | 71.4 | 15.1 |

As can be seen from Embodiments 1-1 to 1-14 and Comparative Embodiments 1-1 to 1-4, when the strength A of the negative current collector, the difference B% between the maximum value and the minimum value of the relative mass percent of silicon atoms in the silicon-based particle, and the mass percent C% of silicon in the negative electrode material layer satisfy: $A \geq 10B + 250(C^{1/4} + \frac{1}{10}/C)$, the cycle performance and the expansion resistance of the lithium-ion battery are improved.

**Table 2**

| | Thickness H of the negative electrode material layer on one side (μm) | Maximum value $D_{max}$ of the particle diameter of the silicon-based particles (μm) | $3 \times D_{max}$ | 400th-cycle capacity retention rate cycled at 25 °C (%) | 400th-cycle deformation rate cycled at 25 °C (%) |
|---|---|---|---|---|---|
| Embodiment 1-6 | 90 | 25 | 75 | 87.7 | 8.1 |
| Embodiment 2-1 | 75 | 25 | 75 | 90.3 | 7.2 |
| Embodiment 2-2 | 80 | 25 | 75 | 89.6 | 7.8 |
| Embodiment 2-3 | 51 | 17 | 51 | 90.4 | 6.5 |
| Embodiment 2-4 | 60 | 17 | 51 | 91.2 | 7.0 |
| Embodiment 2-5 | 30 | 10 | 30 | 89.1 | 7.4 |
| Embodiment 2-6 | 40 | 10 | 30 | 88.6 | 7.9 |

(continued)

|  | Thickness H of the negative electrode material layer on one side ($\mu$m) | Maximum value $D_{max}$ of the particle diameter of the silicon-based particles ($\mu$m) | $3 \times D_{max}$ | 400th-cycle capacity retention rate cycled at 25 °C (%) | 400th-cycle deformation rate cycled at 25 °C (%) |
|---|---|---|---|---|---|
| Embodiment 2-7 | 70 | 25 | 75 | 75.2 | 11.8 |
| Embodiment 2-8 | 45 | 17 | 51 | 78.3 | 12.8 |
| Embodiment 2-9 | 25 | 10 | 30 | 73.2 | 12.8 |

The thickness H of the negative electrode material layer on one side and the maximum value $D_{max}$ of the particle diameter of the silicon-based particle also affect the performance of the lithium-ion battery. As can be seen from Embodiment 1-6 and Embodiments 2-1 to 2-9, when H and $D_{max}$ satisfy $H \geq 3 \times D_{max}$, the lithium-ion battery exhibits good cycle performance and expansion resistance.

Table 3

|  | Porosity P% of the negative electrode plate | Mass percent C% of silicon in the negative electrode material layer | $15 \times C^{1/4}$ | 400th-cycle capacity retention rate cycled at 25 °C (%) | 400th-cycle deformation rate cycled at 25 °C (%) | Capacity retention rate at -10 °C (%) |
|---|---|---|---|---|---|---|
| Embodiment 2-3 | 33 | 3 | 19.74 | 90.4 | 6.5 | 86.1 |
| Embodiment 3-1 | 19.75 | 3 | 19.74 | 87.3 | 9.4 | 83.7 |
| Embodiment 3-2 | 32 | 3 | 19.74 | 92.4 | 6.2 | 88.6 |
| Embodiment 3-3 | 40 | 3 | 19.74 | 86.5 | 9.3 | 85.3 |
| Embodiment 3-4 | 30 | 1 | 15 | 94.2 | 5.3 | 92.3 |
| Embodiment 3-5 | 30 | 5 | 22.43 | 90.2 | 7.0 | 87.4 |
| Embodiment 3-6 | 30 | 10 | 26.67 | 88.2 | 8.8 | 85.4 |
| Embodiment 3-7 | 30 | 15 | 29.52 | 85.3 | 10.2 | 84.2 |
| Embodiment 3-8 | 18 | 3 | 19.74 | 78.3 | 12.8 | 78.9 |
| Embodiment 3-9 | 30 | 20 | 31.7 | 82.3 | 13.6 | 73.9 |

The synergistic effect of the porosity P% of the negative electrode plate and the mass percent C% of silicon in the negative electrode material layer also affects the performance of the lithium-ion battery. As can be seen from Embodiment 2-3 and Embodiments 3-1 to 3-9, when P and C satisfy $P > 15 \times C^{1/4}$, the lithium-ion battery exhibits good room-temperature cycle performance, expansion resistance, and low-temperature cycle performance.

Table 4

|  | Mass percent C% of silicon in the negative electrode material layer | Content Q% of the fluoroethylene carbonate | C/Q | 400th-cycle capacity retention rate cycled at 25 °C (%) | 400th-cycle deformation rate cycled at 25 °C (%) | Capacity retention rate at - 10 °C (%) |
|---|---|---|---|---|---|---|
| Embodiment 3-5 | 5 | / | / | 90.2 | 7.0 | 87.4 |
| Embodiment 4-1 | 5 | 10 | 0.5 | 92.2 | 6.0 | 89.1 |
| Embodiment 4-2 | 5 | 15 | 0.33 | 93.5 | 6.6 | 87.6 |
| Embodiment 4-3 | 5 | 20 | 0.25 | 86.8 | 10.8 | 83.3 |

(continued)

|  | Mass percent C% of silicon in the negative electrode material layer | Content Q% of the fluoroethylene carbonate | C/Q | 400th-cycle capacity retention rate cycled at 25 °C (%) | 400th-cycle deformation rate cycled at 25 °C (%) | Capacity retention rate at - 10 °C (%) |
|---|---|---|---|---|---|---|
| Embodiment 4-4 | 5 | 2 | 2.5 | 91.1 | 7.0 | 88.6 |

The synergistic effect of the mass percent C% of silicon in the negative electrode material layer and the content Q% of the fluoroethylene carbonate in the electrolyte solution also affects the performance of the lithium-ion battery. As can be seen from Embodiment 3-5 and Embodiments 4-1 to 4-4, when Q and C satisfy: $0.3 \leq C/Q \leq 3$, the lithium-ion battery exhibits good room-temperature cycle performance, expansion resistance, and low-temperature cycle performance.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising a positive electrode plate, a negative electrode plate, and an electrolyte solution, wherein the negative electrode plate comprises a negative current collector and a negative electrode material layer,

   the negative electrode material layer comprises a silicon-based composite material, the silicon-based composite material comprises a silicon-based particle, strength of the negative current collector is A MPa, a difference between a maximum value and a minimum value of a relative mass percent of silicon atoms in the silicon-based particle is B%, and a mass percent of silicon in the negative electrode material layer is C%, satisfying:

$$A \geq 10B + 250(C^{1/4} + \frac{1}{10}/C).$$

2. The electrochemical device according to claim 1, wherein the B satisfies: $10 \leq B \leq 16$.

3. The electrochemical device according to claim 1, wherein the C satisfies: $1 \leq C \leq 20$.

4. The electrochemical device according to claim 1, wherein the A satisfies: $370 \leq A \leq 800$.

5. The electrochemical device according to claim 1, wherein a thickness of the negative electrode material layer on one side is H, and a maximum value of a particle diameter of the silicon-based particle is $D_{max}$, satisfying: $H \geq 3 \times D_{max}$.

6. The electrochemical device according to claim 5, wherein the $D_{max}$ satisfies: $10 \mu m \leq D_{max} \leq 25 \mu m$.

7. The electrochemical device according to claim 5, wherein the H satisfies: $30 \mu m \leq H \leq 90 \mu m$.

8. The electrochemical device according to claim 1, wherein a porosity of the negative electrode plate is P%, and the P and C satisfy: $P > 15 \times C^{1/4}$.

9. The electrochemical device according to claim 1, wherein the P satisfies: $18 \leq P \leq 40$.

10. The electrochemical device according to claim 1, wherein the electrolyte solution comprises fluoroethylene carbonate, based on a mass of the electrolyte solution, a mass percent of the fluoroethylene carbonate is Q%, and the Q and C satisfy: $0.3 \leq C/Q \leq 3$.

11. The electrochemical device according to claim 10, wherein the Q satisfies: $1 \leq Q \leq 20$.

12. The electrochemical device according to claim 1, wherein the silicon-based particle comprises silicon and carbon, and an atomic ratio between silicon and carbon in the silicon-based particle is 1: (1 to 2.5).

**13.** An electronic device, comprising the electrochemical device according to any one of claims 1 to 12.

FIG. 1a

FIG. 1b

| | | |
|---|---|---|
| **INTERNATIONAL SEARCH REPORT** | | International application No. |
| | | **PCT/CN2021/141475** |

| | |
|---|---|
| **A.** | **CLASSIFICATION OF SUBJECT MATTER** |
| | H01M 4/134(2010.01)i; H01M 4/133(2010.01)i; H01M 4/1393(2010.01)i; H01M 4/1395(2010.01)i; H01M 4/38(2006.01)i; H01M 4/583(2010.01)i; H01M 4/62(2006.01)i; H01M 10/0525(2010.01)i |
| | According to International Patent Classification (IPC) or to both national classification and IPC |

| | |
|---|---|
| **B.** | **FIELDS SEARCHED** |
| Minimum documentation searched (classification system followed by classification symbols) | |
| H01M | |
| Documentation searched other than minimum documentation to the extent that such documents are included in the fields searched | |
| Electronic data base consulted during the international search (name of data base and, where practicable, search terms used) | |
| CNTXT; CNABS; CNKI; VEN; ENTXT; ENTXTC: 多孔, 碳, 硅, 气体, 气相, 沉积, 拉伸强度, 膨胀, 集流, 集电, Porous, hollow, carbon, silicon, Si, gas, vapor phase, deposition, tensile strength, expansion, current collecting | |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 113228342 A (NINGDE AMPEREX TECHNOLOGY LTD.) 06 August 2021 (2021-08-06) description, paragraphs 4-143 | 1-13 |
| X | CN 103840140 A (TSINGHUA UNIVERSITY et al.) 04 June 2014 (2014-06-04) description, paragraphs [0006]-[0076] | 1, 12 |
| X | CN 105680023 A (SHANGHAI PUTAILAI NEW ENERGY TECHNOLOGY CO., LTD. et al.) 15 June 2016 (2016-06-15) description, paragraphs 5-133 | 1, 12 |
| A | JP 2007103382 A (MITSUBISHI CHEMICAL CORPORATION) 19 April 2007 (2007-04-19) entire document | 1-13 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| **16 August 2022** | **14 September 2022** |
| Name and mailing address of the ISA/CN | Authorized officer |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/141475**

| Patent document cited in search report | | | Publication date (day/month/year) | Patent family member(s) | | | Publication date (day/month/year) |
|---|---|---|---|---|---|---|---|
| CN | 113228342 | A | 06 August 2021 | None | | | |
| CN | 103840140 | A | 04 June 2014 | CN | 103840140 | B | 26 December 2017 |
| CN | 105680023 | A | 15 June 2016 | CN | 105680023 | B | 09 November 2018 |
| JP | 2007103382 | A | 19 April 2007 | JP | 4595931 | B2 | 08 December 2010 |

Form PCT/ISA/210 (patent family annex) (January 2015)